Europäisches Patentamt

European Patent Office

Office européen des brevets

(11) Veröffentlichungsnummer: **0 098 022**
**A1**

(12) **EUROPÄISCHE PATENTANMELDUNG**

(21) Anmeldenummer: 83200942.7

(22) Anmeldetag: 23.06.83

(51) Int. Cl.³: **B 65 D 25/32**
**B 29 F 1/14**

(30) Priorität: 24.06.82 NL 8202570

(43) Veröffentlichungstag der Anmeldung:
11.01.84 Patentblatt 84/2

(84) Benannte Vertragsstaaten:
BE DE FR GB LU NL SE

(71) Anmelder: CURVER VERPAKKINGEN B.V.
Lorentzstraat 6
NL-6710 BD Ede(NL)

(72) Erfinder: Markus, Adrianus Johannes Wilhelm
Juliana van Stolberglaan 209
NL-6713 PH EDE(NL)

(74) Vertreter: Hoogstraten, Willem Cornelis Roeland et al,
OCTROOIBUREAU DSM Postbus 9
NL-6160 MA Geleen(NL)

(54) Kunststoffbehälter mit schwenkbaren Handgriffen und Spritzgussform zur Herstellung eines solchen Behälters.

(57) Ein im Spritzgußverfahren hergestellter Kunststoffbehälter besitzt Handgriffe aus Handgriffteilen (10, 16) an der Behälterwand (2). In einem Abstand unterhalb des oberen Randes (3) des Behälters sind streifenförmige Teile (12, 17) über eine Konsole befestigt. Die Konsole besteht aus einer vom Flanschrand (4) schräg nach unten gerichteten Hilfswand (14). Über vertikale Verstärkungsrippen (19, 20, 21) ist die Hilfswand (14) mit dem Behälter verbunden. Die aus einer Matrize (25) und einer Patrize (26) bestehende Spritzgußform besitzt im Bereich der Formhohlräume (28) eine Trennfläche (27). In der Matrize (25) oder in der Patrize (26) ist eine Kammer (33) ausgespart, worin ein Schiebestück (36) unter Federkraft gegen die Trennflächen (27) gedrückt wird. Weiterhin umfaßt das Schiebestück (36) eine Abstandsfeder (39) und eine Ausstoßfeder (37). Bei geschlossener Form befindet sich das Schiebestück (36) in einer am weitesten von der Trennfläche (27) entfernten Position, wobei das freie Ende der Abstandsfeder (39) außerhalb des Formhohlraumes (28) für die Handgriffe gegen das andere Formteil gedrückt wird. Dabei kommt das freie Ende der Ausstoßfeder (37) im Bereich des Formhohlraumes (28) nicht mit dem anderen Formteil in Berührung.

FIG 6

EP 0 098 022 A1

Kunststoffbehälter mit schwenkbaren Handgriffen
und Spritzgußform zur Herstellung eines solchen Behälters

Die Erfindung bezieht sich auf einen Kunststoffbehälter mit gelenkig an dem Behälter befestigten Handgriffen, von denen jeder ein Handgriffteil und ein streifenförmiges Teil umfaßt, das sich zwischen dem Handgriffteil und der Behälterwand befindet, wobei der Behälter und die Handgriffe einstückig im Spritzgießverfahren unter Bildung eines integrierten Gelenks im streifenförmigen Teil hergestellt sind.

Ein solcher Kunststoffbehälter ist aus der US - PS 3,884,384 bekannt. Die Schlaufe des Handgriffs ist hier über ein streifenförmiges Teil mit dem nach außen gerichteten Flanschrand verbunden. Hierdurch ist es nicht möglich, auf dem Behälter einen unter den Kralrand greifenden Deckel anzubringen, was von Nachteil ist, wenn der Behälter als Verpackungsbehälter verwendet werden soll, z.B. als Verpackungseimer für puderförmige oder flüssige Materialien. Weiterhin wird beim Entleeren des Behälters ein an der Öffnung des Behälters angebrachter Handgriff schnell verschmutzt.

Die Erfindung bezweckt die Schaffung eines Kunststoffbehälters mit gelenkigen Handgriffen des vorbeschriebenen Typs mit einem freien oberen Rand, der mit einem unter den Kralrand greifenden Deckel versehen werden kann, und von dem einige Ausführungen in einer einfachen Auf-Zu-Spritzgußform hergestellt werden können, d.h. eine im wesentlichen aus einem Patrizenteil und einem Matrizenteil bestehende Form, bei der die Teile gemäß ihrer in einer Linie liegenden Mittellinien in- und auseinandergeschoben werden können.

Das wird dadurch erreicht, daß der streifenförmige Teil in einiger Entfernung unterhalb des oberen Randes des Behälters am Behälter befestigt ist.

Bezüglich der Ausdrücke "oben", "unten", "horizontal" und "vertikal" wird hier davon ausgegangen, daß der Behälter mit seinem Boden auf einer horizontalen Ebene steht.

Vorzugsweise ist das streifenförmige Teil an einer sich am Behälter befindlichen Konsole befestigt.

Ein erfindungsgemäß ausgeführter Behälter läßt den oberen Rand des Behälters für das Anbringen eines Deckels mit übergreifendem Rand frei, der für die Befestigung auf dem Behälter eventuell einen Kralrand rings um die Öffnung des Behälters untergreifen kann. Der Rand des Behälters ist weiterhin frei zum Ausgießen, ohne daß die Handgriffe verschmutzt werden.

Die Konsole kann aus einem in einiger Entfernung unterhalb des oberen Randes des Behälters angebrachten, seitlich vorstehenden, sich rings um den Behälter erstreckenden Wandflansch bestehen.

Vorzugsweise besteht die Konsole aus einem in einiger Entfernung unterhalb des oberen Randes des Behälters angebrachten, seitlich vorstehenden Trägerstück.

Wenn der Behälter mit einem sich rings um seinen oberen Rand erstreckenden, nach unten hin offenen, rinnenförmigen Kralrand versehen wird, der durch einen Teil der Behälterwand, einen nach außen gerichteten Flanschrand und eine rings um den Flanschrand nach unten gerichtete Kralwand gebildet wird, ist es vorteilhaft, die sich vertikal über dem Trägerstück befindlichen Teile des Flanschrandes und der Kralwand mit Unterbrechungen zu versehen.

Bei einem Behälter, der mit einem vorbeschriebenen Kralrand versehen ist, kann die Konsole aus einer vom Flanschrand schräg seitwärts nach unten gerichteten, bis unter die Unterseite des Kralrandes reichenden Hilfswand bestehen, so daß die Schnittlinie der Hilfswand und der horizontalen Ebene auf der Höhe der Unterseite der Kralwand innerhalb des Außenumfangs der Kralwand liegt. Die sich oberhalb der Hilfswand befindlichen Teile des Flanschrandes und der Kralwand können Unterbrechungen aufweisen.

Auch bei den beschriebenen Ausführungen des Behälters mit unterbrochenen Kralrandteilen kann ein den Kralrand untergreifender Deckel angebracht werden. Durch das Unterbrechen eines Teils des Flanschrandes und der Kralwand genügen zur Herstellung einfache Auf-Zu- Spritzgußformteile. Die Abdichtung des Deckels und des Behälters wird durch das Unterbrechen des Flanschrandes und der Kralwand nicht beeinflußt, wenn z.B. ein Deckel mit einem abgesenkten Mittelteil verwendet wird, wie er aus der französischen Patentschrift 1.231.761 bekannt ist, wo die Außenseite des abgesenkten Schürzenrandes durch Klemmen abdichtend gegen die Innenwand des Behälters anliegt.

Um der schrägen Hilfswand eine bestimmte Steifigkeit zu geben, kann diese Wand durch Verstärkungsrippen mit dem Behälter verbunden werden.

Um die schräge Hilfswand, die als Befestigungsstelle für die Handgriffe dient, noch weiter zu verstärken, wird vorzugsweise der rinnenförmige Kralrand auf beiden Seiten der schrägen Hilfswand durch Abschlußwände abgeschlossen. Hierbei ist es von Vorteil, daß die Abschlußwände in den vorgenannten Verstärkungsrippen ihre Fortsetzung finden.

Die schräge Hilfswand kann sich an den Flanschrand anschließen. Hierdurch kann an dieser Stelle ein Teil des Flanschrandes bestehen bleiben, was zur Formfestigkeit der Behälteröffnung beiträgt, während dieses Teil auch als mögliche Abdichtungsfläche zwischen Behälter und Deckel dienen kann.

Die Biegsamkeit des integrierten Gelenks kann so gewählt werden, daß der Handgriff unter seinem eigenen Gewicht vertikal nach unten hängt. Hierdurch ist eine kompakte Anordnung auf z.B. einer Palette möglich.

Es ist vorteilhaft, z.B. beim Bedrucken der Behälter, die Handgriffe in einer nach oben gerichteten Position feststellen zu können. Das kann dadurch erreicht werden, daß die Abschlußwände mit Nocken versehen werden, hinter die das streifenförmige Teil des Handgriffs gedrückt werden kann.

Es ist empfehlenswert, die Befestigungsstelle des streifenförmigen Teils des Handgriffs an der Konsole außerhalb des Außenumfangs des Kralrandes zu wählen. Das hat den Vorteil, daß zwischen der Schlaufe und dem Kralrand etwas Platz für die Finger ist.

Die Erfindung bezieht sich auch auf eine Spritzgußform, die mit Mitteln versehen ist, die das Festhängen der Handgriffe in einem Formteil beim Auseinanderschieben der Formteile verhindert.

Das wird durch eine Spritzgußform erreicht, die im wesentlichen eine Matrize und eine Patrize umfaßt, die gemäß ihrer ineinander verlängerten liegenden Mittellinien in- und auseinandergeschoben werden können, mit einer Trennfläche im Bereich des Formhohlraumes für die Handgriffe, wobei die Spritzgußform dadurch gekennzeichnet wird, daß in dem einen Formteil eine Kammer ausgespart ist, in der ein Schiebestück durch eine fortdauernd gegen die Trennfläche gerichtete Federkraft zwischen zwei in verschiedenen Abständen von der Trennfläche gelegenen Positionen dadurch verschiebbar ist, daß das Schiebestück mindestens eine Abstandsfeder und eine Ausstoßfeder trägt und diese Federn durch Kanäle im Formteil zur Trennfläche gerichtet sind und daß bei geschlossener Form das Schiebestück sich in der am weitesten von der Trennfläche entfernten Position befindet, wodurch das freie Ende der Abstandsfeder außerhalb des Formhohlraumes für die Handgriffe gegen das andere Formteil gedrückt wird und das freie Ende der Ausstoßfeder im Bereich des Formhohlraumes nicht mit dem anderen Formteil in Berührung kommt.

Beim Ausschieben der Patrize, wobei der Behälter vorerst auf der Patrize verbleibt, wird das Schiebestück anfänglich unter Verschiebung infolge des Federdrucks relativ auf derselben Höhe gehalten. Hierdurch drückt die Ausstoßfeder gegen den geformten Handgriff und löst diesen aus der Patrize. Das ist der Fall, wenn die Lösung aus der Matrize einfacher geht als aus der Patrize. Die Kammer mit dem Schiebestück ist dann in der Patrize angebracht.

Bei einem Handgriff, der aus einem schlaufenförmigen Handgriffteil und einem streifenförmigen
Teil besteht, ist es vorzuziehen, die Abstandsfeder bei geschlossener Form innerhalb der Schlaufe
gegen das gegenüberliegende Formteil drücken zu
lassen. Hierdurch wird erreicht, daß die Form nicht
größer ausgeführt zu werden braucht als nötig.
Gleichfalls ist es von Vorteil, das Ende der Ausstoßfeder bei geschlossener Form mit der Wand des
Formhohlraumes in dem Formteil zusammenfallen zu
lassen, in dem sich die Kammer befindet. Eine unnötige Schwächung des Handgriffs oder Materialverlust wird auf diese Weise verhindert.

Behälter und Handgriffe können im Spritzgußverfahren
aus dazu geeigneten Kunststoffen wie Polyäthylen
oder Polypropylen hergestellt werden, wobei Polypropylen vorzuziehen ist, da dieses Material sich
u. a. zur Herstellung von integrierten Gelenken hervorragend eignet, die viele Gelenkbewegungen überstehen können. Bei Einweg-Verpackungseimern ist
Polyäthylen, insbesondere Polyäthylen hoher Dichte,
auch ein sehr gut geeigneter Grundstoff.

Die Erfindung wird anhand der in der Zeichnung
wiedergegebenen Ausführungsbeispiele näher erläutert.

In der Zeichnung ist:

Fig. 1    eine Draufsicht auf einen erfindungsgemäßen Behälter mit
          Handgriffen;

Fig. 2    ein Schnitt durch den Behälter
          nach der Linie II - II in Fig. 1;

Fig. 3    eine perspektivische Sicht einer
          bevorzugten erfindungsgemäßen Ausführungsform eines Behälters mit
          schwenkbaren Handgriffen;

Fig. 4    eine Draufsicht auf den Behälter
          nach Fig. 3;

Fig. 5    ein Schnitt durch den Behälter
          nach Linie V - V in Fig. 4 und

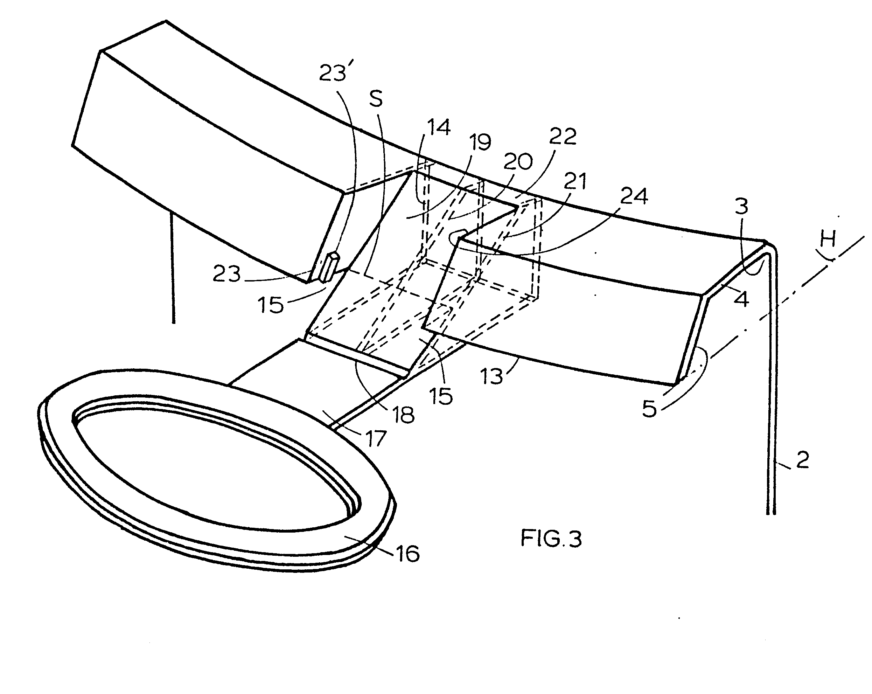

Fig. 6    ein Schnitt durch eine Spritzgußform
          für einen Behälter nach den
          Fig. 3, 4 und 5 nach einer Linie VI - '

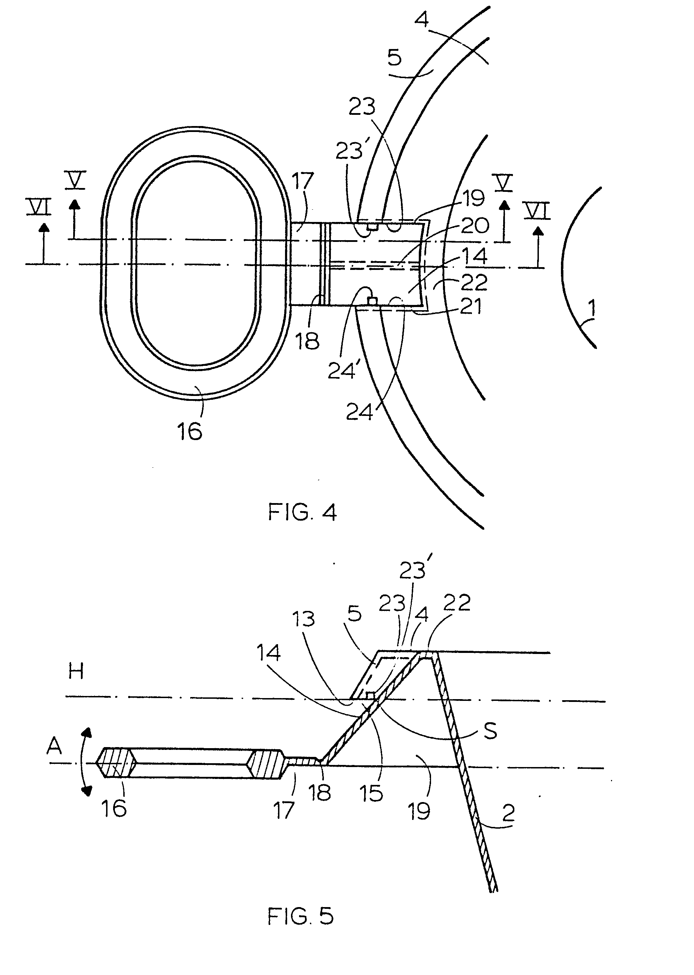

          in Fig. 4.

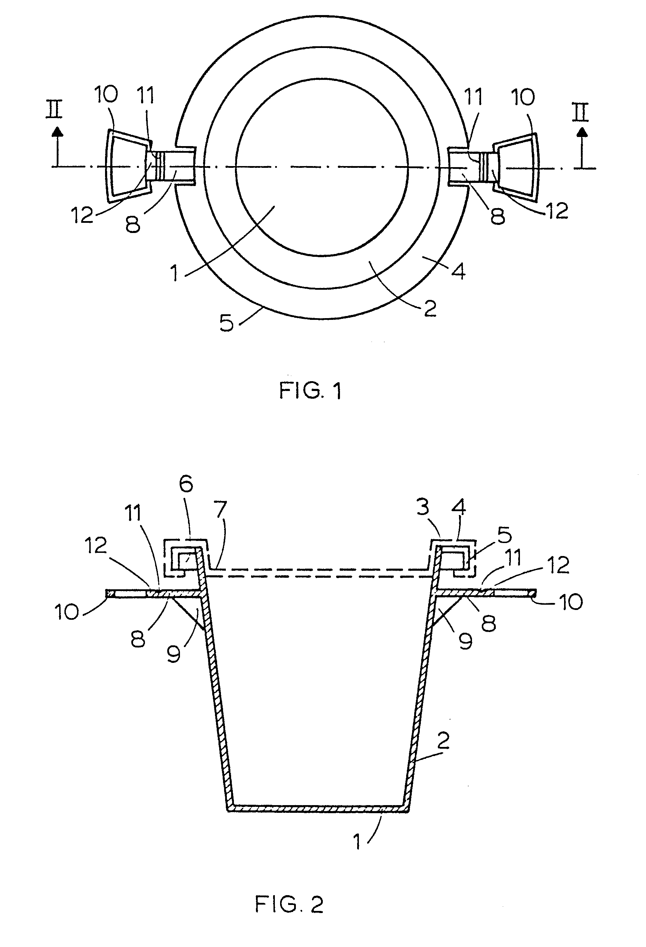

In der Draufsicht auf einen Behälter (Fig. 1) und in
einem Schnitt durch den Behälter (Fig. 2) ist mit 1 der
Boden und mit 2 die Behälterwand bezeichnet. Der
obere Rand 3 der Behälterwand ist ringsum mit einem
Flanschrand 4 versehen, der seinerseits ringsum eine
nach unten gerichtete Kralwand 5 trägt. Der obere Teil der Behälterwand 2, der Flanschrand 4 und die Kralwand 5 bilden zusammen einen nach unten offenen rinnenförmigen Kralrand 6, den ein mit einer gestrichelten Linie wiedergegebener Deckel 7 untergreifen kann, um den Deckel auf dem Behälter festzuhalten. Der Deckel 7 ist nur in Fig. 2 wiedergegeben. Die Behälterwand 2 ist mit Konsolen in Form von seitlich vorstehenden Trägerstücken 8 versehen, die durch Rippen 9 verstärkt sind. Die Konsolen stehen außerhalb der Kralwand vor und befinden sich in genügendem Abstand unterhalb der Kralwand, um das Anbringen des Deckels 7 zu ermöglichen. Anstelle von einzelnen Trägerstücken 8 kann auf derselben Höhe auch ein sich rings um den Behälter erstreckender, seitlich vorstehender Wandflansch als Konsole angebracht sein.

Oberhalb der einzelnen Trägerstücke 8 befinden sich keine Flanschrand- und Kralwandteile. Durch das Weglassen dieser Teile ist es möglich, den Behälter mit einer einfachen Spritzgußform herzustellen. Die Handgriffteile lo der Handgriffe sind durch mit integrierten Gelenken 11 versehene streifenförmige Teile 12 mit den Trägerstücken verbunden. Diese integrierten Gelenke befinden sich so weit außerhalb des Außenumfangs der Kralwand, daß bei einem mit einem Deckel versehenen Behälter eine senkrecht nach oben gerichtete Position der Handgriffe möglich ist.

In Fig. 3, einer bevorzugten Ausführungsform der
Erfindung in perspektivischer Wiedergabe, bezeichnen die Bezugsziffern 2, 3, 4 und 5 wieder
jeweils die Behälterwand, den oberen Rand des
Behälters, den Flanschrand und die Kralwand. Die
Konsole besteht hier aus einer von dem Flanschrand schräg nach unten gerichteten, bis unterhalb
der Unterseite 13 der Kralwand 5 und bis außerhalb
des Umfangs der Kralwand 5 reichenden Hilfswand 14,
die die horizontale Ebene auf der Höhe der Unterseite 5' der Kralwand nach einer Linie S schneidet,
die innerhalb des Außenumfangs der Kralwand liegt.
Hierdurch verbleibt ein Raum 15 für den untergreifenden
Rand eines Deckels verfügbar. Der Handgriff, bestehend aus einem schlaufenförmigen Handgriffteil 16
und einem streifenförmigen Teil 17, ist bei 18
durch ein integriertes Gelenk mit der Hilfswand 14
verbunden. Die schräge Hilfswand ist durch Verstärkungsrippen 19, 2o und 21 mit der Behälterwand 2
und dem restlichen Teil des Flanschrandes 22 verbunden.

An beiden Seiten der schrägen Hilfswand 14 ist der
rinnenförmige Kralrand durch Abschlußwände 23 und 24
abgeschlossen, die ihre Fortsetzung jeweils in den
Verstärkungsrippen 19 und 21 finden. Um den Handgriff in einer nach oben gerichteten Position feststellen zu können, können die Abschlußwände mit
Nocken versehen sein, die mit 23' und 24' in Fig.

3 und 4 bezeichnet sind. In Fig. 4, die eine Draufsicht auf den perspektivischen Teil des Behälters aus Fig. 3 darstellt, und in Fig. 5, die einen Schnitt nach der Linie V - V in Fig. 4 wiedergibt, sind für die verschiedenen Teile dieselben Bezugsziffern benutzt wie in Fig. 3. Mit dem Buchstaben H ist die horizontale Ebene auf der Höhe der Unterseite 5' der Kralwand 5 bezeichnet und mit S die Schnittlinie von Ebene H und Hilfswand 14.

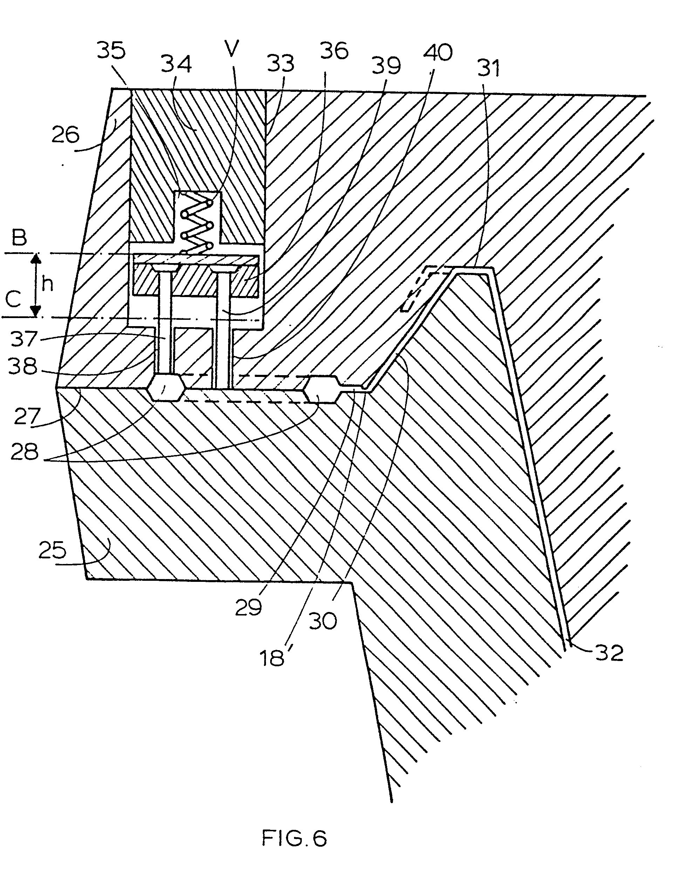

Ein axialer Schnitt einer Spritzgußform an der Stelle der Verstärkungsrippe 2o wird teilweise in Fig. 6 gezeigt. Die Form besteht im wesentlichen aus einer topfförmigen Matrize 25 und einer als Kern dienenden Patrize 26, zwischen denen sich im Bereich des zu formenden Handgriffs eine Trennfläche 27 befindet. Der Formhohlraum für das schlaufenförmige Handgriffteil ist mit 28, der Formhohlraum für den streifenförmigen Handgriff ist mit 29, der Formhohlraum für die schräge Hilfswand ist mit 3o, der Formhohlraum für den restlichen Teil des Flanschrandes ist mit 31 und der Formhohlraum für den Behälter ist mit 32 bezeichnet. Die Stelle, an der in diesem Falle das integrierte Gelenk im streifenförmigen Teil des Handgriffs geformt werden soll, ist mit 18' bezeichnet.

In der Patrize ist eine Kammer 33 ausgespart, in der unter einem Füllstück 34 mit Aussparungen 35 ein Schiebestück 36 zwischen zwei Positionen B und C über einen Abstand h verschiebbar ist. Auf das Schiebestück wird durch die Federkraft einer Feder V dauernd eine Kraft gegen die Trennfläche 27 ausgeübt. Das Schiebestück ist mit einer Ausstoßfeder 37, die durch einen Kanal 38 bis an die obere Wand des Formhohlraums 28 für den Handgriff reicht, und weiterhin mit einer Abstandsfeder 39 versehen, die durch einen Kanal 4o reicht und gegen die Oberseite der Matrize auf der Trennfläche innerhalb des schlaufenförmigen Hohlraumes 28 für den Handgriff drückt.

Die Funktion der Spritzgußform ist wie folgt. Nachdem die Form, wie sie in geschlossener Position in Fig. 6 dargestellt ist, mit Kunststoffmaterial gefüllt und genügend abgekühlt ist, wird die Patrize nach oben bewegt. Der Behälter und die Handgriffe bleiben anfänglich an der Patrize. Dadurch daß das Schiebestück beim Hochbewegen der Patrize in Folge des Federdrucks relativ auf derselben Höhe gehalten wird, wird durch diese Bewegung der Patrize die Ausstoßfeder 37 gegen den geformten Handgriff im Formhohlraum 28 gedrückt, wodurch der Handgriff aus dem Formhohlraum in der Patrize gedrückt wird. Auf diese Weise wird eine treffsichere Lösung des Handgriffs erreicht. Der Handgriff kann nun, wie mit dem Pfeil A in Fig. 5 angegeben ist, nach oben und nach unten um das integrierte Gelenk 18 bewegt werden. Vorzugsweise wird das Gelenk so biegsam ausgeführt, daß der Handgriff unter normalen Umständen vertikal nach unten hängt.

Die in der Patrize befindliche Kammer mit Schiebestücken und Federn kann erforderlichenfalls in
der Matrize untergebracht werden, falls die Lösung
aus der Patrize leichter geht als aus der Matrize.

- 14 -                                    0098022

Patentansprüche:

1. Kunststoffbehälter mit gelenkig an dem Behälter befestigten Handgriffen, von denen jeder ein Handgriffteil (1o, 16) und ein streifenförmiges Teil (12, 17) umfaßt, das sich zwischen dem Handgriffteil (1o, 16) und der Behälterwand (2) befindet, wobei der Behälter und die Handgriffe einstückig im Spritzgießverfahren unter Bildung eines integrierten Gelenks (11, 18) im streifenförmigen Teil (12, 17) hergestellt sind, dadurch gekennzeichnet, daß das streifenförmige Teil (12, 17) mit etwas Abstand unterhalb des oberen Randes (3) des Behälters am Behälter befestigt ist.

2. Kunststoffbehälter nach Anspruch 1, dadurch gekennzeichnet, daß das streifenförmige Teil (12, 17) an einer sich am Behälter befindlichen Konsole befestigt ist.

3. Kunststoffbehälter nach Anspruch 2, dadurch gekennzeichnet, daß die Konsole aus einem mit etwas Abstand unterhalb des oberen Randes (3) des Behälters angebrachten, seitlich vorstehenden, sich rings um den Behälter erstreckenden Wandflansch besteht.

4. Kunststoffbehälter nach Anspruch 2, dadurch gekennzeichnet, daß die Konsole aus einem mit etwas Abstand unterhalb des oberen Randes (3) des Behälters angebrachten, seitlich vorstehenden Trägerstück (8) besteht.

5. Kunststoffbehälter nach den Ansprüchen 1, 2 und 4, dadurch gekennzeichnet, daß der Behälter rings um seinen oberen Rand (3) mit einem nach unten offenen rinnenförmigen Kralrand (6) versehen ist, der durch einen Teil der Behälterwand (2), einen nach außen gerichteten Flanschrand (4) und eine rings um den Flanschrand nach unten gerichtete Kralwand (5) gebildet wird, und daß die sich vertikal oberhalb des Trägerstücks (8) befindlichen Teile des Flanschrandes (4) und der Kralwand (5) Unterbrechungen aufweisen.

6. Kunststoffbehälter nach Anspruch 1 und 2, dadurch gekennzeichnet, daß der Behälter rings um seinen oberen Rand (3) mit einem nach unten offenen rinnenförmigen Kralrand (6) versehen ist, der durch einen Teil der Behälterwand (2), einen nach außen gerichteten Flanschrand (4) und eine rings um den Flanschrand nach unten gerichtete Kralwand (5) gebildet wird, daß die Konsole aus einer vom Flanschrand (4) schräg seitwärts nach unten gerichteten, bis unterhalb der Unterseite (13) der Kralwand (5) reichenden Hilfswand (14) besteht, so daß die Schnittlinie (S) der Hilfswand (14) und der horizontalen Ebene (H) auf der Höhe der Unterseite (5') der Kralwand (5) innerhalb des Außenumfangs der Kralwand (5) liegt, und daß die sich vertikal oberhalb der Hilfswand (14) befindlichen Teile des Flanschrandes (4) und der Kralwand (5) Unterbrechungen aufweisen.

7. Kunststoffbehälter nach Anspruch 6, dadurch gekennzeichnet, daß die schräge Hilfswand (14) durch vertikale Verstärkungsrippen (19, 2o, 21) mit dem Behälter verbunden ist.

8. Kunststoffbehälter nach den Ansprüchen 6 oder 7, dadurch gekennzeichnet, daß an beiden Seiten der schrägen Hilfswand (14) der rinnenförmige Kralrand (6) durch Abschlußwände (23, 24) abgeschlossen ist.

9. Kunststoffbehälter nach Anspruch 8, dadurch gekennzeichnet, daß die Abschlußwände (23, 24) ihre Fortsetzung in Verstärkungsrippen (19, 21) finden.

lo. Kunststoffbehälter nach einem der Ansprüche 6 bis 9, dadurch gekennzeichnet, daß die schräge Hilfswand (14) an den Flanschrand (22) anschließt.

11. Kunststoffbehälter nach einem der Ansprüche 1 bis lo, dadurch gekennzeichnet, daß das integrierte Gelenk (11, 18) eine solche Biegsamkeit besitzt, daß die Handgriffe unter ihrem eigenen Gewicht vertikal nach unten hängen.

12. Kunststoffbehälter nach einem der Ansprüche 1 bis 11, dadurch gekennzeichnet, daß Mittel vorgesehen sind, durch die die Handgriffe in vertikaler Position nach oben gerichtet festgestellt werden können.

13. Kunststoffbehälter nach Anspruch 12, dadurch gekennzeichnet, daß die Feststellmittel für einen Handgriff aus auf den Abschlußwänden (23, 24) angebrachten Nocken (23', 24') bestehen.

14. Kunststoffbehälter nach einem der Ansprüche 2 bis 13, dadurch gekennzeichnet, daß die Befestigungsstelle des streifenförmigen Teils (12, 17) an der Konsole sich außerhalb des Außenumfangs der Kralwand (5) befindet.

15. Spritzgußform zur Herstellung eines Kunststoffbehälters nach einem der Ansprüche 1 bis 14, im wesentlichen eine Matrize (25) und eine Patrize (26) umfassend, die nach ihren ineinander verlängerten liegenden Mittellinien in- und auseinandergeschoben werden können, und mit einer Trennfläche (27) im Bereich der Formhohlräume (28) für die Handgriffe, dadurch gekennzeichnet, daß in einem Formteil (25 oder 26) eine Kammer (33) ausgespart ist, in der ein Schiebestück (36) unter einer dauernd gegen die Trennfläche (27) gerichteten Federkraft zwischen zwei in verschiedenen Abständen (B und C) von der Trennfläche (27) gelegenen Positionen verschiebbar ist, daß das Schiebestück (36) zumindest eine Abstandsfeder (39) und eine Ausstoßfeder (37) aufweist, wobei die Federn (39, 37) durch Kanäle (4o, 38) im Formteil
gegen die Trennfläche (27) gerichtet sind, und daß
bei geschlossener Form sich das Schiebestück (36)
in der am weitesten von der Trennfläche entfernten
Position (B) befindet, wobei das freie Ende der
Abstandsfeder (39) außerhalb des Formhohlraums (28)
für die Handgriffe gegen das andere Formteil
gedrückt wird und das freie Ende der Ausstoßfeder (37)
im Bereich des Formhohlraums (28) nicht mit dem
anderen Formteil in Berührung kommt.

16. Spritzgußform nach Anspruch 15 für einen Behälter mit
    Handgriff, wobei der Handgriff aus einem schlaufenförmigen Handgriffteil (lo, 16) besteht, das mit
    einem streifenförmigen Teil (12, 17) mit der Konsole
    verbunden ist, dadurch gekennzeichnet, daß bei
    geschlossener Form das freie Ende der Abstands-
    feder (39) sich innerhalb des schlaufenförmigen
    Hohlraums (28) befindet und daß das freie Ende der
    Ausstoßfeder (37) gleich liegt mit der Wand des
    Formhohlraums (28) in dem Formteil, in dem sich die
    Kammer befindet.

FIG. 1

FIG. 2

0098022

FIG.3

FIG. 4

FIG. 5

FIG.6

Europäisches
Patentamt

**EUROPÄISCHER RECHERCHENBERICHT**

**0098022**
Nummer der Anmeldung

EP  83 20 0942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| A | BE-A- 740 556 (GABRIELS SPRL.) * Figuren 5-8; Seite 4, Zeilen 18-20, 25-29 * | 1-4,7 | B 65 D 25/32 B 29 F 1/14 |
| | --- | | |
| A | DE-A-1 236 770 (DITGES) * Figur 1; Spalte 2, Zeilen 24-25, 35-44; Spalte 3, Zeilen 8-14 * | 1,4,5, 11 | |
| | --- | | |
| A | EP-A-0 037 153 (CURVER) * Figuren 2,4-6; Seite 1, Zeilen 1-8; Seite 3, Zeilen 7-10; Seite 5, Zeilen 3-5 * | 1,3,4 | |
| | --- | | |
| D,A | US-A-3 884 384 (LLOYD) * Figur 2; Spalte 1, Zeilen 1-10 * | 1,2,11 ,14 | |

**RECHERCHIERTE SACHGEBIETE (Int. Cl. ³)**

| Kategorie | Kennzeichnung | Betrifft | Sachgebiete |
|---|---|---|---|
| | --- | | B 65 D |
| A | US-A-4 215 789 (PFEIFER) * Spalte 3, Zeilen 16-19 * | 12 | B 29 F A 47 G |
| | --- | | |
| A | FR-A-2 125 789 (CRONZET) * Figuren 1-3; Seite 3, Zeilen 1-10 * | 15,16 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 06-09-1983 | STEEGMAN R. |